# EUROPÄISCHE PATENTANMELDUNG

(11) **EP 3 309 486 A1**
(43) Veröffentlichungstag der Anmeldung: **18.04.2018**
(21) Anmeldenummer: 17195160.1
(22) Anmeldetag: 06.10.2017
(51) Int. Cl.: F25D 29/00

(54) **KÜHL- UND/ODER GEFRIERGERÄT**

(30) Priorität: 11.10.2016 DE 102016012186; 11.01.2017 DE 102017000202
(71) Anmelder: Liebherr-Hausgeräte Ochsenhausen GmbH, 88416 Ochsenhausen (DE)
(72) Erfinder: Giesa, Andreas, 88400 Biberach (DE); Locher, Erwin, 88416 Ochsenhausen (DE)
(74) Vertreter: Herrmann, Uwe

(57) **Zusammenfassung**

Die Erfindung betrifft ein Kühl- und/oder Gefriergerät mit wenigstens einer Erfassungseinrichtung, wenigstens einer Auswerteinrichtung und wenigstens einer Regelungs-/Steuerungseinrichtung. Die Erfindung ist ferner auf ein Verfahren zur Regelung/Steuerung eines entsprechenden Kühl- und/oder Gefriergeräts gerichtet.

## Beschreibung

Die Erfindung betrifft ein Kühl- und/oder Gefriergerät mit wenigstens einer Erfassungseinrichtung, wenigstens einer Auswerteinrichtung und wenigstens einer Regelungs-/Steuerungseinrichtung.

Aus dem Stand der Technik bekannte Kühl- und/oder Gefriergeräte werden üblicherweise durch manuelle Einstellungen an einer Regelungs-/Steuerungseinrichtung in gewünschte Betriebszustände mit beispielsweise höheren oder niedrigeren Leistungsaufnahmen eingestellt. Dabei muss von einer Bedienperson abgeschätzt werden, ob der sich momentan im Kühl- und/oder Gefriergerät befindliche Inhalt eine größere oder kleinere Kühlleistung erforderlich macht und davon abhängig die entsprechende Kühlleistung am Kühl- und/oder Gefriergerät eingestellt werden.

Problematisch daran ist, dass für eine energieeffiziente Einstellung des Kühl- und/oder Gefriergeräts umständlich alle oder wenigstens ein Großteil der im Kühl- und/oder Gefriergerät eingelagerten Objekte von der Bedienperson berücksichtigt werden muss. Gegebenenfalls muss ferner darauf geachtet werden, dass bei geplanten insbesondere größeren Einlagerungen von Kühlgut in den und/oder Auslagerungen von Kühlgut aus dem Kühl- und/oder Gefriergerät auch schon vor der entsprechenden Einlagerung oder Auslagerung eine erhöhte oder verringerte Kühlleistung am Kühl- und/oder Gefriergerät abgerufen werden sollte. Diese Steuerungsvorgänge erfordern von den Nutzern des Kühl- und/oder Gefriergeräts bzw. von der Bedienperson erhöhte Aufmerksamkeit und insgesamt einen Mehraufwand bei der Nutzung des Kühl- und/oder Gefriergeräts.

Es ist daher Aufgabe der vorliegenden Erfindung ein verbessertes Kühl- und/oder Gefriergerät bereitzustellen, mittels dem eine verbesserte und insbesondere automatisierte Regelung bzw. Steuerung des Kühl- und/oder Gefriergeräts unter Berücksichtigung von dessen Inhalt ermöglicht ist. Diese Aufgabe wird erfindungsgemäß durch ein Kühl- und/oder Gefriergerät mit den Merkmalen des Anspruchs 1 gelöst. Vorteilhafte Ausbildungen sind Gegenstand der Unteransprüche.

Demnach ist ein Kühl- und/oder Gefriergerät mit wenigstens einer Erfassungseinrichtung vorgesehen, die dazu eingerichtet ist, erste Informationen insbesondere zum Inhalt des Kühl- und/oder Gefriergeräts zu erfassen, mit wenigstens einer Auswerteinrichtung, die dazu eingerichtet ist, automatisch insbesondere den Inhalt des Kühl- und/oder Gefriergeräts betreffende zweite Informationen auf Grundlage der ersten Informationen zu ermitteln, und mit wenigstens einer Regelungs-/Steuerungseinrichtung, die dazu eingerichtet ist, Parameter des Kühl- und/oder Gefriergeräts auf Grundlage der zweiten Informationen zu regeln/steuern.

Bei der Erfassungseinrichtung kann es sich beispielsweise um einen Laserscanner, ein RFID-Lesegerät, eine optische, akustische und/oder haptische Eingabe- bzw. Sensorvorrichtung handeln, mittels der Informationen automatisch und/oder manuell bzw. durch eine Bedienperson erfasst werden können. Es kann auch eine kombinierte Erfassungseinrichtung vorgesehen sein, die es der Bedienperson ermöglicht, Informationen zum Inhalt des Kühl- und/oder Gefriergeräts auf mehr als eine Art einzugeben bzw. zu erfassen. Die Erfassungseinrichtung kann beispielsweise eine Kamera sein, die mittels entsprechender Bilderkennungsprogramme die sich im Kühl- und/oder Gefriergeräts befindlichen Objekte erkennt bzw. erfasst. Das Bilderkennungsprogramm kann dabei auf einer Rechnereinheit ausgeführt werden, welche der Erfassungseinrichtung zugeordnet ist. Bei einer Ausführung der Erfassungseinrichtung lediglich als Kamera kann ein entsprechendes Bilderkennungsprogramm auf bzw. mittels der Auswerteinrichtung ausgeführt werden.

Die Erfassungseinrichtung kann auch wie unten Beschrieben über ein Kommunikationsmodul mit dem Kühl- und/oder Gefriergerät verbunden sein, wobei das Kommunikationsmodul zum Anschließen bzw. zum Koppeln einer Mehrzahl von Erfassungseinrichtungen bzw. Hardwaremodulen mit dem Kühl- und/oder Gefriergerät ausgebildet sein kann.

Die Auswerteinrichtung kann eine mit der Erfassungseinrichtung gekoppelte oder von dieser getrennte Rechnereinheit sein, welche auf Grundlage der von der Erfassungseinrichtung erfassten ersten Information zweite Informationen bzw. zweite Datensätze zum Inhalts des Kühl- und/oder Gefriergeräts berechnet.

Bei den zweiten Informationen kann es sich um Metainformationen zu den ersten Informationen handeln. Wenn die ersten Informationen beispielsweise Aussagen zur Art des Inhalts des Kühl- und/oder Gefriergeräts oder zur Menge des Inhalts des Kühl- und/oder Gefriergeräts oder zu dem Wochentag bzw. Zeitpunkt umfassen, an dem der Inhalt des Kühl- und/oder Gefriergeräts verändert wird, so können auf dieser Grundlage mittels der Auswerteinheit zweite Informationen erstellt werden, die beispielsweise die Frequenz der Änderungen des Inhalts des Kühl- und/oder Gefriergeräts betreffen oder den üblichen Wochentag oder Zeitpunkt, an dem der Inhalt des Kühl- und/oder Gefriergeräts geändert wird. Kommt die Auswerteinrichtung beispielsweise zu dem Ergebnis, dass an einem bestimmten Wochentag und zu einer bestimmten Uhrzeit üblicherweise eine besonders große Änderung des Inhalts des Kühl- und/oder Gefriergeräts beispielsweise durch die Einlagerung von eingekauften und noch nicht gekühlten Gütern erfolgt, so kann die Regelungs-/Steuerungseinrichtung auf Grundlage dieser zweiten Informationen den Parameter der Kühlleistung des Kühl- und/oder Gefriergeräts zukünftig vor einer entsprechenden erwarteten Befüllung des Kühl- und/oder Gefriergeräts mit zu kühlenden Gütern verändern, d.h. insbesondere die Kühlleistung des Kühl- und/oder Gefriergeräts vor dem erwarteten Zuführen von zu kühlenden Gütern heraufsetzen.

Vorteilhafterweise kann hierdurch vermieden werden, dass die Temperatur innerhalb des Kühl- und/oder Gefriergeräts durch Zuführen bzw. Einlagern größerer zu kühlender Mengen von Kühlgut unerwünscht erhöht wird, ohne dass hierzu der Nutzer des Kühl- und/oder Gefriergeräts selbst eingreifen muss.

In einer bevorzugten Ausführung ist denkbar, dass die ersten Informationen Informationen zu der Art, zu der Menge, zu der zeitlichen Veränderung der Menge und/oder der Art des Inhalts des Kühl- und/oder Gefriergeräts und/oder zu dem aktuellen Strompreis bzw. zum aktuellen Stromangebot umfassen.

Damit ist es möglich den Inhalt des Kühl- und/oder Gefriergeräts automatisch und genau zu erfassen und den durch den Inhalt bedingten Kühlbedarf des Kühl- und/oder Gefriergeräts genauer und jeweils automatisch zu ermitteln. Durch die Speicherung der ersten und/oder der zweiten Informationen kann ferner ein Histogramm des Kühl- und/oder Gefriergeräteinhalts erstellen werden bzw. können entsprechende Metadaten gesammelt, ausgewertet und/oder gespeichert werden, was zur besser abgestimmten und insbesondere auch vorausschauenden Regelung des Kühl- und/oder Gefriergeräts genutzt werden kann.

Durch die Erfassung des aktuellen Strompreises bzw. Stromangebots kann ferner ermittelt werden, zu welchen Kosten die jeweils notwendige Kühlleistung bereitgestellt werden kann. Dadurch ist es möglich, in Zeiten besonders niedriger Strompreise bzw. eines besonders großen aktuellen Stromangebots die Kühlleistung z.B. in einem Gefrierteil des Kühl- und/oder Gefriergeräts zu steigern und die Temperatur in dem Gefrierteil innerhalb eines zulässigen Bereichs auf einen besonders tiefen Wert einzustellen. Hierdurch kann der Gefrierteil als Kältespeicher genutzt werden und es kann dabei in Zeiten besonders günstiger Strompreise mehr Leistung abgerufen werden um in Zeiten höherer Strompreise weniger Leistung abrufen zu müssen. Umgekehrt ist es möglich, in Zeiten hoher Strompreise die Temperatur in dem Kühl- und/oder Gefriergerät innerhalb eines zulässigen Bereichs zu erhöhen, um dadurch die Aufnahme teuren Stroms zu reduzieren.

In einer weiteren bevorzugten Ausführung ist es denkbar, dass die geregelten/gesteuerten Parameter des Kühl- und/oder Gefriergeräts Temperatur-Parameter, Leistungs-Parameter und/oder Parameter einer Superfrost-Funktion sind. In einer weiteren bevorzugten Ausführung ist denkbar, dass die automatische Ermittlung der zweiten Informationen mittels Machine Learning erfolgt. Damit kann die Auswerteinrichtung automatisch beispielsweise Muster in den ersten Informationen und/oder Zusammenhänge zwischen bzw. innerhalb der ersten Informationen erkennen und daraus selbstständig Metainformationen bzw. zweite Informationen als Grundlage zur Regelung/Steuerung des Kühl- und/oder Gefriergeräts ableiten.

Denkbar ist in einer weiteren Ausbildung, dass die Erfassungseinrichtung zur Erfassung von Umgebungs- und/oder Gerätedaten ausgebildet ist. Mit den Umgebungs- und/oder Gerätedaten können beispielsweise die Umgebungstemperatur, die Dauer und/oder die Zeitpunkte von Türöffnungsereignissen des Kühl- und/oder Gefriergeräts oder Ähnliches gemeint sein. Auch diese Daten können als erste Information von der Auswerteinrichtung beispielsweise mittels Machine Learning ausgewertet werden und als Grundlage für eine verbesserte Regelung/Steuerung des Kühl- und/oder Gefriergeräts genutzt werden.

Bei den Umgebungsdaten kann es sich ferner beispielsweise um Informationen darüber handeln, ob und welche Personen bzw. welche Nutzer sich dem Kühl- und/oder Gefriergerät nähern und beispielsweise wie lange die entsprechenden Nutzer eine Tür des Kühl- und/oder Gefriergeräts üblicherweise geöffnet halten und/oder welche Inhalte des Kühl- und/oder Gefriergeräts für den jeweiligen Nutzer insbesondere zu welchen Zeitpunkten relevant sind.

Mittels der Auswerteinrichtung kann somit beispielsweise ein Profil für jeden Nutzer des Kühl- und/oder Gefriergeräts erstellt werden, aus dem beispielsweise hervorgeht, welche Inhalte welcher Nutzer üblicherweise zu welchen Zeiten aus dem Kühl- und/oder Gefriergerät entnimmt. Auf Grundlage dieser zweiten Informationen kann die Regelungs-/Steuerungseinrichtung beispielsweise Parameter einer Anzeige des Kühl- und/oder Gefriergeräts so ändern, dass dem Nutzer angezeigt wird, in welchem Bereich des Innenraums des Kühl- und/oder Gefriergeräts sich die von ihm vermutlich gesuchten bzw. benötigten Objekte befinden, sodass die Suche der entsprechenden Objekte vereinfacht wird und der Nutzer des Kühl- und/oder Gefriergeräts bereits vor dem Öffnen des Kühl- und/oder Gefriergeräts weiß, wo seine bevorzugten oder gesuchten Objekte innerhalb des Kühl- und/oder Gefriergeräts angeordnet sind. Hierdurch kann die Öffnungsdauer der Tür des Kühl- und/oder Gefriergeräts verringert werden, was zu geringeren Kälteverlusten durch das Türöffnen und zu einem verringerten Energieverbrauch zur Herstellung der gewünschten niedrigen Temperatur führt.

In einer weiteren bevorzugten Ausführung ist denkbar, dass die Erfassungseinrichtung zur Erfassung der altersbedingten Abnutzung des Kühl- und/oder Gefriergeräts eingerichtet ist. Mit der altersbedingten Abnutzung können sich verändernde Parameter des Kühl- und/oder Gefriergeräts gemeint sein, wie beispielsweise eine sich verringernde Kühlleistung bei gleichbleibender oder steigender Stromaufnahme. Die Erfassungseinrichtung kann hierzu beispielsweise die Betriebsdauer des Kompressors, die Anzahl der Schaltzyklen des Kompressors und/oder sonstige Parameter erfassen, die einen Bezug zum Alter bzw. zur Laufleistung Kühl- und/oder Gefriergeräts haben. Auf Grundlage der mittels der Erfassungseinrichtung erfassten Veränderungen des Kühl- und/oder Gefriergeräts kann die Regelungs-/Steuerungseinrichtung entsprechend angepasste Regelungs-/Steuerungstätigkeiten veranlassen bzw. durchführen und somit den Betriebsablauf auch bei alternden Kühl- und/oder Gefriergeräten verbessern.

In einer weiteren bevorzugten Ausführung ist denkbar, dass ein Kommunikationsmodul mit wenigstens einer Einrichtung des Kühl- und/oder Gefriergeräts verbunden ist, wobei das Kommunikationsmodul dazu eingerichtet ist, das Kühl- und/oder Gefriergerät mit wenigstens einem weiteren Hardwaremodul zur Durchführung eines Lebensmittelmanagements zu verbinden. Das Kommunikationsmodul kann dabei ein integriertes oder ein externes Modul sein, welches entsprechend als Teil der üblichen Regelungs-/Steuerungselektronik ausgeführt ist oder als insbesondere modulares Bauteil mit der üblichen Regelungs-/Steuerungselektronik eines Kühl- und/oder Gefriergeräts koppelbar ist. Das Kommunikationsmodul kann eine von dem Kühl- und/oder Gefriergerät unabhängige Stromversorgung aufweisen.

Es kann ferner beispielsweise mit der Erfassungseinrichtung verbunden sein und/oder die Erfassungseinrichtung mit weiteren Hardwaremodulen wie beispielsweise einem Mikrofon, einer Kamera oder einer Eingabe-/Ausgabeeinrichtung zum Eingeben/Ausgeben von Informationen verbinden, wodurch ein Lebensmittelmanagement vereinfacht bzw. ermöglicht wird. Das Kommunikationsmodul kann auch als Tablet oder Smartphone ausgebildet sein und beispielsweise über eine Funkverbindung wie beispielsweise über Bluetooth mit der Erfassungseinrichtung und/oder der Regelungs-/Steuerungseinrichtung des Kühl- und/oder Gefriergeräts gekoppelt sein.

Das Kommunikationsmodul kann eine Schnittstelle zwischen den einzelnen Komponenten des Kühl- und/oder Gefriergeräts sein, wobei festgelegt sein kann, dass nur ein spezielles Kommunikationsmodul oder nur eine begrenzte Anzahl spezieller Kommunikationsmodule wie beispielsweise die Smartphones in einem gegebenen Familienhaushalt die Schnittstellenfunktionen zwischen den Komponenten des Kühl- und/oder Gefriergeräts einnehmen dürfen. Hierdurch können unautorisierte Zugriffe auf die Komponenten des Kühl- und/oder Gefriergeräts erschwert werden.

In einer weiteren bevorzugten Ausführung ist denkbar, dass das Kommunikationsmodul der Erfassungseinrichtung entspricht oder Teil der Erfassungseinrichtung ist. Damit kann eine besonders einfache Nachrüstung eines aus dem Stand der Technik bekannten Kühl- und/oder Gefriergeräts mit einer vielseitig nutzbaren Erfassungseinrichtung erfolgen. Weiterhin ist denkbar, dass das Kommunikationsmodul dazu eingerichtet ist, eine Verbindung mit einem insbesondere externen Server bereitzustellen. Die Verbindung kann hierbei insbesondere über das Internet und/oder über WLAN erfolgen. Zwischen dem externen Server und dem Kommunikationsmodul kann ein Datenaustausch erfolgen, bei dem beispielsweise Parameter zur Durchführung des Machine Learnings oder sonstige Geräteparameter geändert bzw. eingestellt werden können. Es können ferner erfasste Geräte- und/oder Umweltdaten von der Kühl- und/oder Gefriergerät an den Server übertragen werden. Die dem Server zur Verfügung gestellten Daten auch mehrere Kühl- und/oder Gefriergeräte können insbesondere zentral ausgewertet werden und zur Verbesserung des Betriebs des Kühl- und/oder Gefriergerätes genutzt werden.

Die Erfindung ist auch auf ein Verfahren zur Regelung/Steuerung eines Kühl- und/oder Gefriergeräts nach einen der Ansprüche 1 bis 9 gerichtet. Das Verfahren umfasst die Schritte:
- Erfassen von ersten Informationen insbesondere zum Inhalt des Kühl- und/oder Gefriergeräts;
- Ermitteln von zweiten, insbesondere den Inhalt des Kühl- und/oder Gefriergeräts betreffenden Informationen auf Grundlage der ersten Informationen;
- Regeln/Steuern von Parametern des Kühl- und/oder Gefriergeräts auf Grundlage der zweiten Informationen.

Das Verfahren kann in besonderen Ausführungen Merkmale bzw. Verfahrensschritte umfassen, die analog in den Vorrichtungsansprüchen 1 bis 9 und den entsprechenden Textabschnitten der Beschreibung näher erläutert sind. Auf eine Wiederholung der entsprechenden Merkmale wird daher verzichtet.

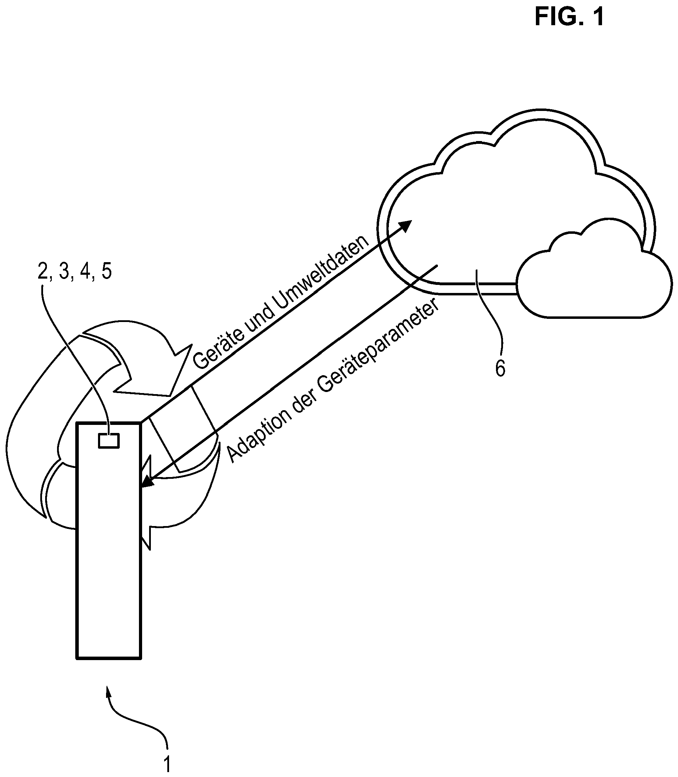

Weitere Einzelheiten und Vorteile der Erfindung sind anhand der Figur 1 beispielhaft erläutert.

Die einzelne Figur 1 zeigt ein erfindungsgemäßes Kühl- und/oder Gefriergerät 1, welches beispielsweise über ein Kommunikationsmodul 4 mit einem insbesondere externen Server 6 bzw. einem externen Cloud-Dienst zum Austausch von Daten verbunden sein kann. Das Kühl- und/oder Gefriergerät 1 kann eine Erfassungseinrichtung 2 zur Erfassung von Geräte- und/oder Umweltdaten bzw. von ersten Informationen umfassen. Mit den ersten Informationen bzw. Daten können insbesondere Informationen zum Inhalt des Kühl- und/oder Gefriergeräts 1 gemeint sein. Das Kühl- und/oder Gefriergerät 1 kann ferner eine Auswerteinheit 3 zur automatischen Ermittlung von insbesondere dem Inhalt des Kühl- und/oder Gefriergeräts 1 betreffenden zweiten Informationen auf Grundlage der ersten Informationen umfassen. Diese zweite Informationen können zum Regeln/Steuern von Parametern des Kühl- und/oder Gefriergeräts 1 mittels einer Regelungs-/Steuerungseinrichtung 5 dienen. Die Erfassungseinrichtung 2, die Auswerteinheit 3, das Kommunikationsmodul 4 und/oder die Regelungs-/Steuerungseinrichtung 5 können beispielsweise als integrierte oder wenigstens teilweise integrierte Einheit ausgebildet sein.

Das Kommunikationsmodul 4 kann mit dem Kühl- und/oder Gefriergerät 1 über eine Schnittstelle am Kühl- und/oder Gefriergerät 1 z.B. über einen Steckschacht verbunden sein und/oder mit der Geräte-Elektronik des Kühl- und/oder Gefriergeräts 1 interagiert sein. An das Kommunikationsmodul 4 können weitere Hardwaremodule angeschlossen werden und bieten somit die Möglichkeit, ein datenbasiertes Lebensmittelmanagement auf- bzw. umzusetzen. Die Daten aus dem "Virtual Pantry", das heißt aus der virtuellen Speisekammer, die Verbrauchsberechnung aus Rezeptvorschlägen und/oder die Nutzung eines Einkaufslisten-Managements führen zu einer Prognosebasis, die Aussagen darüber ermöglicht, welche bevorzugten Produkte der Kunde bzw. die Bedienperson des Kühl- und/oder Gefriergeräts 1 nutzt und wie sein Einkaufsverhalten ist. Die Erfassungseinrichtung 2 kann alternativ oder zusätzlich zur Erfassung auch dieser oder eines Teils dieser Daten ausgebildet sein.

Hinsichtlich des Inhalts des Kühl- und/oder Gefriergeräts 1 kann ein Bezug zu Produktgruppen und/oder Produktmengen und/oder Haltbarkeitsangaben der Produkte gegeben sein. Auf Grundlage dieser Daten können die Geräteparameter mittels Machine Learning automatisch optimiert werden. So kann z.B. die TemperaturRegelung im Kühl- und/oder Gefriergerät 1 aufgrund der häufig eingekauften und verbrauchten Artikel angepasst werden. Ebenso kann z.B. SuperFrost zu typischen Einkaufszeiten des Kunden automatisch gestartet werden. Somit kann die Gerätesteuerung in Abhängigkeit der tatsächlichen Kundenanforderungen gebracht werden bzw. erfolgen und sogar optimiert werden. Dies bedeutet jedoch einen hohen Einfluss des Kommunikationsmoduls 4 auf die Gerätesteuerung, die in direkte Abhängigkeit von externen Anwendungen gebracht werden kann.

Mittels des erfindungsgemäßen Kühl- und/oder Gefriergeräts kann eine Komfortsteigerung erzielt werden, indem die Lagertemperatur des Kühl- und/oder Gefriergeräts 1 automatisch an die eingelagerten Lebensmittel und/oder an die Einkaufsgewohnheiten des Kunden angepasst wird. Die Geräteregelung bzw. - steuerung kann anhand von ausgewerteten Umgebungs- und/oder Gerätedaten adaptiert und somit auf das individuelle Nutzungsverhalten des Kunden optimiert bzw. angepasst werden. Die Geräteregelung bzw. -steuerung kann über die gesamte Lebensdauer des Kühl- und/oder Gefriergerätes auf die altersbedingte Abnutzung adaptiert werden.

## Patentansprüche

1. Kühl- und/oder Gefriergerät mit wenigstens einer Erfassungseinrichtung, die dazu eingerichtet ist, erste Informationen insbesondere zum Inhalt des Kühl- und/oder Gefriergeräts zu erfassen, wenigstens einer Auswerteinrichtung, die dazu eingerichtet ist, automatisch insbesondere den Inhalt des Kühl- und/oder Gefriergeräts betreffende zweite Informationen auf Grundlage der ersten Informationen zu ermitteln, und wenigstens einer Regelungs-/Steuerungseinrichtung, die dazu eingerichtet ist, Parameter des Kühl- und/oder Gefriergeräts auf Grundlage der zweiten Informationen zu regeln/steuern.

2. Kühl- und/oder Gefriergerät nach Anspruch 1, **dadurch gekennzeichnet, dass** die ersten Informationen Informationen zu der Art, zu der Menge, zu der zeitlichen Veränderung der Menge und/oder der Art des Inhalts des Kühl- und/oder Gefriergeräts und/oder zu dem aktuellen Strompreis bzw. zum aktuellen Stromangebot umfassen.

3. Kühl- und/oder Gefriergerät nach Anspruch 1 oder 2, **dadurch gekennzeichnet, dass** die geregelten/gesteuerten Parameter des Kühl- und/oder Gefriergeräts Temperatur-Parameter, Leistungs-Parameter und/oder Parameter einer SuperFrost-Funktion sind.

4. Kühl- und/oder Gefriergerät nach Anspruch 1, 2 oder 3, **dadurch gekennzeichnet, dass** die automatische Ermittlung der zweiten Informationen mittels Machine Learning erfolgt.

5. Kühl- und/oder Gefriergerät nach einem der vorhergehenden Ansprüche, **dadurch gekennzeichnet, dass** die Erfassungseinrichtung zur Erfassung von Umgebungs- und/oder Gerätedaten ausgebildet ist.

6. Kühl- und/oder Gefriergerät nach einem der vorhergehenden Ansprüche, **dadurch gekennzeichnet, dass** die Erfassungseinrichtung zur Erfassung der altersbedingten Abnutzung des Kühl- und/oder Gefriergeräts eingerichtet ist.

7. Kühl- und/oder Gefriergerät nach einem der vorhergehenden Ansprüche, **dadurch gekennzeichnet, dass** ein Kommunikationsmodul mit wenigstens einer Einrichtung des Kühl- und/oder Gefriergeräts verbunden ist, wobei das Kommunikationsmodul insbesondere dazu eingerichtet ist, das Kühl- und/oder Gefriergerät mit wenigstens einem weiteren Hardwaremodul zur Durchführung eines Lebensmittelmanagements zu verbinden.

8. Kühl- und/oder Gefriergerät nach Anspruch 7, **dadurch gekennzeichnet, dass** das Kommunikationsmodul der Erfassungseinrichtung entspricht oder Teil der Erfassungseinrichtung ist.

9. Kühl- und/oder Gefriergerät nach Anspruch 7 oder 8, **dadurch gekennzeichnet, dass** das Kommunikationsmodul dazu eingerichtet ist, eine Verbindung mit einem insbesondere externen Server bereitzustellen.

10. Verfahren zur Regelung-/Steuerung eines Kühl- und/oder Gefriergeräts nach einen der Ansprüche 1 bis 9, wobei das Verfahren die Schritte umfasst:
• Erfassen von ersten Informationen insbesondere zum Inhalt des Kühl- und/oder Gefriergeräts;
• Ermitteln von zweiten, insbesondere den Inhalt des Kühl- und/oder Gefriergeräts betreffende Informationen auf Grundlage der ersten Informationen;
• Regeln/Steuern von Parametern des Kühl- und/oder Gefriergeräts auf Grundlage der zweiten Informationen.
